# EUROPÄISCHE PATENTANMELDUNG

(11) **EP 4 631 820 A1**
(43) Veröffentlichungstag der Anmeldung: **15.10.2025**
(21) Anmeldenummer: 25167279.6
(22) Anmeldetag: 31.03.2025
(51) Int. Cl.: B61J 3/12, B60F 1/04, E02F 9/02

(54) **ZWEIWEGEFAHRZEUG**

(30) Priorität: 09.04.2024 DE 102024109797
(71) Anmelder: Liebherr-Hydraulikbagger GmbH, 88457 Kirchdorf/Iller (DE)
(72) Erfinder: SCHICK, Marcel, 87700 Memmingen (DE); MÜLLER, Michael, 89165 Dietenheim (DE); GRABMAIER, Stefan, 86842 Türkheim (DE)
(74) Vertreter: Laufhütte, Dieter

(57) **Zusammenfassung**

Die Erfindung betrifft ein Zweiwegefahrzeug, insbesondere einen Zweiwegebagger, mit einem Unterwagen, welcher ein Radfahrwerk mit mindestens zwei Radachsen für die Straßenfahrt und ein Schienenfahrwerk mit einer vorderen und einer hinteren Schienenachse für die Schienenfahrt umfasst, wobei der Unterwagen ein Mittelstück umfasst, an welchem die Radachsen angeordnet sind. Das Schienenfahrwerk umfasst Aktuatoren, mittels welchen die Schienenachsen relativ zum Mittelstück zwischen einer ersten Fahrstellung für die Straßenfahrt und wenigstens einer zweiten Fahrstellung für die Schienenfahrt bewegbar sind. Erfindungsgemäß umfasst das Schienenfahrwerk wenigstens ein Endstück, welches eine der Schienenachsen trägt und um eine parallel zu einer Längsachse des Unterwagens verlaufende Pendelachse drehbar am Mittelstück gelagert ist, um Unebenheiten bei der Schienenfahrt durch eine Pendelbewegung der Schienenachse auszugleichen. Das Endstück ist über ein erstes Drehlager und ein entlang der Pendelachse vom ersten Drehlager beabstandetes zweites Drehlager am Mittelstück gelagert. Die Erfindung betrifft ferner ein Schienenfahrwerk für ein erfindungsgemäßes Zweiwegefahrzeug.

## Beschreibung

Die vorliegende Erfindung betrifft ein Zweiwegefahrzeug, insbesondere einen Zweiwegebagger, gemäß dem Oberbegriff des Anspruchs 1 sowie ein Schienenfahrwerk für ein solches.

Zweiwegefahrzeuge sind aus dem Stand der Technik bekannt und zeichnen sich dadurch aus, dass sie multifunktional einsetzbar sind. Einerseits besitzen derartige Fahrzeuge ein Radfahrwerk und damit Straßentauglichkeit, sodass sie flexibel und unabhängig zum und am Einsatzort verfahren werden können. Andererseits weisen sie ein Schienenfahrwerk auf, das über Aktuatoren in eine Betriebsstellung gebracht und für die Schienenfahrt eingesetzt werden kann. Dadurch können Zweiwegefahrzeuge wie gewöhnliche Schienenfahrzeuge auf Gleisen verfahren, wobei der Antrieb während der Schienenfahrt üblicherweise über eine oder mehrere angetriebene Radachsen des Radfahrwerks oder über das Schienenfahrwerk erfolgt.

Derartige Zweiwegefahrzeuge können für unterschiedliche Arbeitsfunktionen konzipiert sein, beispielsweise als Schienenreinigungsfahrzeuge, Hebezeuge bzw. Krane, Greifer bzw. Materialumschlaggeräte, Hebebühnen, Dumper oder Bagger. Das Schienenfahrwerk kann dabei entweder als Anbaukonstruktion an ein bestehendes, straßentaugliches Fahrzeug montierbar oder in den Grundstahlbau des Unterwagens integriert sein.

Aus der DE 20 2006 017 727 U1 ist ein Zweiwegebagger bekannt, welcher einen gewöhnlichen Unterwagen mit Radfahrwerk besitzt, an dessen Stirnseiten (in Fahrtrichtung gesehen) Anbauten montiert sind, die mittels Hydraulikzylindern um horizontale Schwenkachsen schwenkbare Schienenachsen tragen. Durch Absenken bzw. Runterschwenken der Schienenachsen mittels der Hydraulikzylinder wird die Betriebsstellung für die Schienenfahrt hergestellt, bei der der Zweiwegebagger über das Radfahrwerk angetrieben und über das Schienenfahrwerk auf den Schienen geführt wird. Durch Anheben bzw. Hochschwenken der Schienenachsen mittels der Hydraulikzylinder wird die Betriebsstellung für die Straßenfahrt hergestellt.

Sind die Schienenachsen, so wie bei dem in der DE 20 2006 017 727 U1 offenbarten Gerät, fest, d.h. ohne Möglichkeit einer Pendelbewegung um eine zur Fahrtrichtung parallele Längsachse an die Grundstahlbaustruktur des Fahrzeugs angebunden, können eventuelle Höhenunterschiede der Schienen aufgrund von Schienenunebenheiten und/oder -verwindungen (nachfolgend nur noch als Schienenunebenheiten bezeichnet) nicht ausreichend ausgeglichen werden. Dies kann dazu führen, dass ein Schienenrad beim Überfahren einer solchen Schienenunebenheit von der Schiene abhebt, was zu einer unsicheren Führung und im schlimmsten Fall zu einem Entgleisen des Zweiwegefahrzeugs führen kann.

Der vorliegenden Erfindung liegt daher die Aufgabe zugrunde, ein gattungsgemäßes Zweiwegefahrzeug bereitzustellen, welches bei einer Schienenfahrt einen Ausgleich von Schienenunebenheiten ermöglicht. Das Zweiwegefahrzeug soll dabei einen robusten und kompakten Aufbau besitzen.

Erfindungsgemäß wird diese Aufgabe durch die Kombination der Merkmale des Anspruchs 1 gelöst. Vorteilhafte Ausführungsformen der Erfindung ergeben sich aus den Unteransprüchen und der nachfolgenden Beschreibung.

Demnach wird ein Zweiwegefahrzeug vorgeschlagen, bei welchem es sich insbesondere um einen Zweiwegebagger handeln kann. Das Zweiwegefahrzeug besitzt einen Unterwagen, welcher ein Radfahrwerk mit mindestens zwei Radachsen für die Straßenfahrt und ein Schienenfahrwerk mit einer vorderen und einer hinteren Schienenachse für die Schienenfahrt umfasst. Die Radachsen besitzen für die Straßenfahrt ausgebildete Räder bzw. Straßenräder (im Folgenden nur als Räder bezeichnet), während die Schienenachsen für die Schienenfahrt ausgebildete Schienenräder besitzen. Der Unterwagen umfasst weiterhin ein Mittelstück, an welchem die Radachsen angeordnet sind. Mindestens eine der Radachsen ist lenkbar, um das Zweiwegefahrzeug bei der Straßenfahrt (= erste Fahrstellung) lenken zu können. Ferner ist mindestens eine der Radachsen aktiv antreibbar, sodass das Zweiwegefahrzeug bei der Straßenfahrt über das Radfahrwerk angetrieben und gelenkt werden kann. Das Mittelstück kann eine Stahlbaukonstruktion darstellen.

Das Zweiwegefahrzeug besitzt mindestens eine zweite Fahrstellung für die Schienenfahrt, in der die Schienenachsen so weit abgesenkt sind, dass die Schienenräder auf den Schienen aufsitzen. Bevorzugt sitzen bei der zweiten Fahrstellung sowohl die Schienenräder als auch die Räder der Radachsen auf den Schienen auf, sodass das Zweiwegefahrzeug über die Schienenräder auf den Schienen geführt und über die Radachsen angetrieben wird. Alternativ kann in der zweiten Fahrstellung das Zweiwegefahrzeug nur über die Schienenachsen bzw. Schienenräder auf den Schienen aufsitzen, während die Räder der Radachsen von den Schienen abgehoben sind, wobei das Zweiwegefahrzeug über wenigstens eine der Schienenachsen angetrieben wird. Besonders bevorzugt ist es, wenn das Zweiwegefahrzeug drei unterschiedliche Fahrstellungen besitzt: eine erste Fahrstellung für die Straßenfahrt, eine zweite Fahrstellung für die Schienenfahrt, in der das Zweiwegefahrzeug über die Schienenräder auf den Schienen geführt und über die Radachsen angetrieben wird und eine dritte Fahrstellung, in der das Zweiwegefahrzeug nur über die Schienenräder auf den Schienen aufsitzt und angetrieben wird.

Das Zweiwegefahrzeug umfasst ferner Aktuatoren, mittels welchen die Schienenachsen relativ zum Mittelstück und somit relativ zu den Radachsen zwischen den genannten Fahrstellungen bewegt, insbesondere verschwenkt werden können.

Erfindungsgemäß umfasst das Schienenfahrwerk wenigstens ein Endstück, welches eine der Schienenachsen trägt und um eine parallel zu einer Längsachse des Unterwagens verlaufende Pendelachse drehbar am Mittelstück gelagert ist, um bei der Schienenfahrt Schienenunebenheiten durch eine Pendelbewegung der Schienenachse um die genannte Pendelachse auszugleichen. Die Längsachse ist vorliegend so definiert, dass sie bei einer Geradeausfahrt des Zweiwegefahrzeugs auf horizontal verlaufenden Schienen parallel zur Fahrtrichtung, d.h. ebenfalls horizontal verläuft. Durch die drehbare Lagerung der Schienenachse am Mittelstück wird sichergestellt, dass Schienenunebenheiten effektiv ausgeglichen werden können und alle Schienenräder unabhängig von der Gleisbeschaffenheit stets Schienenkontakt haben. Aufgrund der Ausrichtung der Pendelachse parallel zur Längsachse ergeben sich ferner bei einem Ausgleichen von Schienenunebenheiten keine oder nur sehr geringe ungewollte parasitäre Bewegungen der Schienenachse um die Hochachse.

Erfindungsgemäß ist das Endstück über ein erstes Drehlager sowie über ein entlang der Pendelachse vom ersten Drehlager beabstandetes zweites Drehlager am Mittelstück drehbar gelagert. Die beiden axial voneinander beabstandeten Drehlager definieren die genannte Pendelachse, um die die Schienenachse beim Ausgleich von Schienenunebenheiten pendelt (genauer gesagt besitzen die beiden Drehlager koaxiale Drehachsen, die die genannte Pendelachse definieren). Die Pendelbewegung der Schienenachse erfolgt daher nicht etwa aufgrund einer beweglichen Achslagerung durch entsprechende Ausgestaltung der Lagerstellen, sondern um eine durch die beiden Drehlager definierte Drehachse, nämlich die genannte Pendelachse.

Durch die doppelte Lagerung des Endstücks über zwei axial voneinander beabstandete Drehlager können nicht nur Vertikal- und Horizontalkräfte, sondern auch Momente effektiv über die Drehlager zwischen Endstück und Mittelstück übertragen werden. Insbesondere kann das zweite Drehlager, welches weiter von der Schienenachse entfernt ist als das erste Drehlager, als Momentenstütze dienen, die primär Dreh- bzw. Kippmomente zwischen Endstück und Mittelstück überträgt. Das erste Drehlager kann primär der Übertragung von Vertikal- und Horizontalkräften zwischen Endstück und Mittelstück dienen und ist vorzugsweise massiver aufgebaut bzw. grö-ßer dimensioniert als das zweite Drehlager.

Das Endstück kann als Anbauteil ausgebildet sein, das über entsprechende Verbindungsmittel (z.B. eine Bolzen- und/oder eine Schraubenverbindung) am Mittelstück montierbar ist.

In einer möglichen Ausführungsform ist vorgesehen, dass das erste Drehlager an einer in Fahrtrichtung gesehen vorderen oder hinteren Stirnseite des Mittelstücks angeordnet ist und dass das zweite Drehlager in Richtung der gegenüberliegenden Stirnseite des Mittelstücks versetzt zum ersten Drehlager angeordnet ist. Dadurch ergibt sich eine besonders kompakte Bauweise des Unterwagens, trotz der Realisierung einer Momentenstütze. Der zusätzliche Stützarm beansprucht hierbei nur wenig zusätzlichen, den Unterwagen nach vorne oder hinten verlängernden Bauraum.

In einer weiteren möglichen Ausführungsform ist vorgesehen, dass das erste Drehlager dazu ausgebildet ist, Kräfte parallel zur Pendelachse, d.h. in axialer Richtung zu übertragen. Vorzugsweise ist das zweite Drehlager als Loslager ausgebildet, d.h. die beiden Drehlager bilden insgesamt eine drehbare fliegende Lagerung. Dadurch werden axial wirkende Kräfte wie beispielsweise Beschleunigungs- und Bremskräfte definiert durch das erste Drehlager aufgenommen und in das Mittelstück eingeleitet, während eine Übertragung von Momenten primär über das zweite Drehlager erfolgt.

Das erste Drehlager kann über eine oder mehrere Bundbuchsen am Endstück gelagert sein, wobei axiale Kräfte über die Bundbuchse(n) zwischen Endstück und Drehlager übertragen werden.

In einer weiteren möglichen Ausführungsform ist vorgesehen, dass das zweite Drehlager an einem Stützarm des Endstücks angeordnet ist, der einen das erste Drehlager lagernden stirnseitigen Endabschnitt des Mittelstücks umgreift. Alternativ oder zusätzlich kann der Stützarm zu einer Unterseite des Mittelstücks verlaufen, wo das zweite Drehlager mit dem Mittelstück verbunden ist. Das zweite Drehlager befindet sich vorzugsweise an einem Endabschnitt des Stützarms. Durch den Stützarm wird eine starre Verbindung zwischen den Abschnitten des Endstücks, an denen die ersten und zweiten Drehlager befestigt sind, hergestellt. Der Stützarm wirkt somit als Momentenstütze, welcher Dreh- bzw. Kippmomente über das zweite Drehlager vom Endstück auf das Mittelstück überträgt.

In einer weiteren möglichen Ausführungsform ist vorgesehen, dass wenigstens eine Radachse um eine koaxial zur Pendelachse verlaufende Radfahrwerkpendelachse schwenkbar gelagert ist. Vorzugsweise ist genau eine Radachse um die Radfahrwerkpendelachse schwenkbar gelagert. Es ist prinzipiell aber auch denkbar, dass mehr als eine oder (bei einem Radfahrwerk mit mehr als zwei Radachsen) alle Radachsen um die Radfahrwerkpendelachse schwenkbar gelagert sind. Derartige Radfahrwerkpendelachsen für Arbeitsmaschinen wie beispielsweise Hydraulikbagger sind an sich bekannt und erlauben eine Pendelbewegung wenigstens einer Radachse relativ zum Unterwagen um eine gemeinsame Achse. Wenigstens eine der Radachsen ist hierbei auf einem Pendelbolzen gelagert, welcher die Radfahrwerkpendelachse definiert. Das Zweiwegefahrzeug kann mindestens einen, vorzugsweise mindestens zwei Pendelachszylinder umfassen, um eine Pendelbewegung der wenigstens einen Radachse wahlweise zu sperren (insbesondere in einem Arbeitsbetrieb, in dem eine stabile Abstützung erforderlich ist) oder freizugeben (z.B. während der Fahrt).

Das zweite Drehlager ist nun vorzugsweise auf dem genannten Pendelbolzen (d.h. auf einem gemeinsamen, die Radfahrwerkpendelachse definierenden Bolzen mit der wenigstens einen Radachse) oder auf einem separaten, koaxial zum Pendelbolzen gelagerten Bolzen gelagert. Dabei fallen die Pendelachse der Schienenachsen und die Radfahrwerkpendelachse zusammen, d.h. die Drehlagerung erlaubt eine Pendelbewegung der Schienenachse um die Radfahrwerkpendelachse des Zweiwegefahrzeugs. Die Verwendung der Radfahrwerkpendelachse zur Drehlagerung des Endstücks und Momentenübertragung ergibt einen besonders einfachen und kompakten Aufbau des Unterwagens.

In einer weiteren möglichen Ausführungsform ist vorgesehen, dass das Endstück ein erstes und ein zweites Rahmenteil umfasst, wobei die Schienenachse am ersten Rahmenteil gelagert ist und die ersten und zweiten Drehlager am zweiten Rahmenteil angeordnet sind. Das erste Rahmenteil kann zwei Lagerstellen zur Lagerung bzw. Befestigungsstellen zur Befestigung der Schienenachse umfassen. Die beiden Rahmenteile sind vorzugsweise beweglich und insbesondere in Bezug auf die jeweilige Pendelachse rotationsstarr miteinander verbunden. Mit anderen Worten kann das erste Rahmenteil vorzugsweise relativ zum zweiten Rahmenteil bewegt, allerdings insbesondere nicht um eine parallel zur Pendelachse bzw. Unterwagenlängsachse verlaufende Drehachse rotiert werden. Die Relativbewegung erfolgt über die genannten Aktuatoren, wobei durch die Bewegung des ersten Rahmenteils die Schienenachse in die jeweilige Fahrstellung bewegt werden kann.

Bei einem Pendeln der Schienenachse erfolgt eine relative Drehung also insbesondere zwischen dem zweiten Rahmenteil und dem Mittelstück, nicht jedoch zwischen den beiden Rahmenteilen. Dadurch bleibt die Ausrichtung der Pendelachse unverändert, und zwar unabhängig von der konkreten Fahrstellung. Diese Lösung zeichnet sich durch eine simplere Anbindung der Schienenachse an das erste Rahmenteil aus, da die Bewegung des ersten Rahmenteils über weniger Freiheitsgrade erfolgen kann als bei einer um die Pendelachse drehbaren Anbindung der Schienenachse an das erste Rahmenteil.

In einer weiteren möglichen Ausführungsform ist vorgesehen, dass die ersten und zweiten Rahmenteile schwenkbar miteinander verbunden sind, wobei die verschiedenen Fahrstellungen durch Verschwenken des ersten Rahmenteils relativ zum zweiten Rahmenteil erreicht werden. Die Schwenkachse verläuft insbesondere horizontal und bevorzugt parallel zur Schienenachse. Die erste Fahrstellung wird insbesondere dadurch erreicht, dass das erste Rahmenteil nach oben verschwenkt wird. Zum Erreichen der zweiten Fahrstellung (und, falls vorgesehen, der dritten Fahrstellung) wird das erste Rahmenteil nach unten in Richtung Schienen verschwenkt. Das Verschwenken erfolgt insbesondere über die genannten Aktuatoren, welche vorzugsweise als Kolben-Zylinder-Einheiten, insbesondere als hydraulische Schwenkzylinder, ausgebildet sind. Die Schwenkzylinder sind zwischen den ersten und zweiten Rahmenteilen angeordnet und an diesen jeweils gelenkig gelagert.

In einer weiteren möglichen Ausführungsform ist vorgesehen, dass mindestens ein Endstück über mindestens eine Lageranordnung mit dem Mittelstück gekoppelt ist, welche zwei unterschiedliche Steifigkeiten bereitstellen kann und zwischen einem Dämpfungsmodus mit vergleichsweise niedriger Steifigkeit und einem Sperrmodus mit vergleichsweise höherer Steifigkeit umschaltbar ist. Mit anderen Worten ist die Steifigkeit, d.h. der Widerstand, den die Lageranordnung einer um die Pendelachse erfolgenden Drehbewegung zwischen Endstück und Mittelstück entgegensetzt, im Sperrmodus größer als im Dämpfungsmodus. Der Dämpfungsmodus kommt insbesondere bei der Schienenfahrt zum Einsatz, bei der ein möglichst effektiver Ausgleich von Schienenunebenheiten und eine optimale Fahrdynamik im Vordergrund stehen. Der Sperrmodus kommt dagegen insbesondere in einem schienengebundenen Arbeitsbetrieb des Zweiwegefahrzeugs zum Einsatz, bei dem eine möglichst steife Fahrwerksabstimmung zum Erreichen einer ausreichenden Stabilität erforderlich ist. Das Endstück kann über zwei Lageranordnungen mit dem Mittelstück gekoppelt sein.

In einer weiteren möglichen Ausführungsform ist vorgesehen, dass die Lageranordnung zwei getrennte Baugruppen umfasst, von denen eine erste Baugruppe die höhere Steifigkeit bereitstellt und vorzugsweise ein Elastomerelement (z.B. eine Schichtfeder) umfasst, und von denen eine zweite Baugruppe die niedrigere Steifigkeit bereitstellt und zum Umschalten in den Sperrmodus deaktivierbar ist. Mit dem Deaktivieren der zweiten Baugruppe ist hierbei insbesondere gemeint, dass der durch die zweite Baugruppe bereitgestellte zusätzliche Weg gesperrt wird, sodass eine Stauchung der Lageranordnung nur noch über die erste Baugruppe erfolgt. Die Baugruppen zeichnen sich insbesondere dadurch aus, dass sie unabhängig voneinander ein- und ausgebaut werden können und keine ineinandergreifenden Teile besitzen, die einen gemeinsamen Austausch oder Einbau der Baugruppen erfordern. Dadurch besitzt die Lageranordnung einen einfachen Aufbau, der zudem einfach zu reparieren bzw. zu warten ist.

In einer weiteren möglichen Ausführungsform ist vorgesehen, dass die zweite Baugruppe ein durch die erste Baugruppe kontaktierbares, verschiebbar gelagertes Kontaktelement umfasst, welches zum Umschalten in den Sperrmodus verriegelbar und zum Umschalten in den Dämpfungsmodus entriegelbar ist. Im Sperrmodus ist eine Verschiebung des Kontaktelements blockiert, während im Dämpfungsmodus eine Verschiebung des Kontaktelements mit der niedrigeren Steifigkeit erfolgt.

Vorzugsweise umfasst die zweite Baugruppe einen Hydraulikzylinder mit einem in einem Zylindergehäuse verschiebbar gelagerten Kolben, welcher das Kontaktelement darstellt oder mit diesem verbunden ist. Vorzugsweise umfasst die zweite Baugruppe ferner ein Sperrventil, welches in einer Sperrstellung eine Druckkammer des Hydraulikzylinders hydraulisch absperrt, sodass sich der Kolben und somit das Kontaktelement nicht mehr bewegen kann. Das Sperrventil ist insbesondere Teil eines Hydraulikkreises des Zweiwegefahrzeugs, über welchen die mindestens eine Lageranordnung betreibbar ist. Die genannten Schwenkzylinder können über denselben oder einen separaten Hydraulikkreis betätigbar sein.

In einer weiteren möglichen Ausführungsform ist vorgesehen, dass das Schienenfahrwerk ein vorderes und ein hinteres Endstück umfasst, welche jeweils an einer in Fahrtrichtung gesehen vorderen und hinteren Stirnseite des Mittelstücks angeordnet und jeweils über ein erstes und ein zweites Drehlager drehbar mit dem Mittelstück verbunden sind. Jedes der Endstücke trägt eine Schienenachse und kann gemäß einer der zuvor beschriebenen Ausführungsformen ausgebildet sein. Die vordere Schienenachse und die hintere Schienenachse sind somit über die jeweiligen Drehlagerkombinationen unabhängig voneinander um eine Pendelachse drehbar gegenüber dem Mittelstück gelagert. Die Pendelachsen der Endstücke verlaufen parallel und vorzugsweise unabhängig von der Fahrstellung koaxial zueinander.

Dadurch, dass nicht nur eine, sondern beide Schienenachsen drehbar mit dem Mittelstück verbunden sind, ergibt sich eine verbesserte Ausgleichsmöglichkeit bei Schienenunebenheiten, da beide Schienenachsen unabhängig voneinander Pendelbewegungen ausführen können. Ein weiterer Vorteil ist ein gleichbleibendes Fahrwerksverhalten beim Arbeiten über die vordere oder die hintere Schienenachse. Darüber hinaus werden höhere zulässige Traglasten erreicht, da die Schienenräder bei einer Schwerpunktsverlagerung erst später von den Schienen abheben.

Die zweiten Drehlager der vorderen und hinteren Endstücke können gemeinsam mit den Radachsen auf einem einzigen, gemeinsamen Pendelbolzen oder auf separaten, zu einem Pendelbolzen koaxialen Bolzen gelagert sein.

In einer weiteren möglichen Ausführungsform ist vorgesehen, dass die Schienenachsen relativ zum Mittelstück zwischen einer ersten Fahrstellung für die Straßenfahrt, einer zweiten Fahrstellung, in der das Zweiwegefahrzeug über die Schienenachsen auf Schienen geführt und über die Radachsen antreibbar ist, und einer dritten Fahrstellung, in der das Zweiwegefahrzeug nur über die Schienenachsen auf Schienen aufsitzt und antreibbar ist, bewegbar, insbesondere verschwenkbar sind.

In einer weiteren möglichen Ausführungsform ist vorgesehen, dass zumindest eine der Schienenachsen einen Schienenachsenantriebsmechanismus umfasst, über den die Schienenachse und somit das Zweiwegefahrzeug in der dritten Fahrstellung zum Verfahren auf Schienen antreibbar ist. Der Schienenachsenantriebsmechanismus kann zusammen mit der Schienenachse um die Pendelachse drehbar und über die Aktuatoren relativ zum Mittelstück in die verschiedenen Fahrstellungen bewegbar sein.

In einer weiteren möglichen Ausführungsform ist vorgesehen, dass das Zweiwegefahrzeug einen drehbar auf dem Unterwagen gelagerten Oberwagen umfasst, welche beispielsweise einen Ausleger eines Kranaufbaus, einen Baggerausleger eines Baggeraufbaus, eine Hebebühne oder einen beliebigen anderen Aufbau zum Ausführen einer oder mehrerer Arbeitsfunktionen umfassen kann. Bevorzugt handelt es sich bei dem Zweiwegefahrzeug um einen Zweiwegebagger. Der Unterwagen und der Oberwagen sind vorzugsweise so ausgebildet, dass in wenigstens einer definierten Oberwagenstellung, vorzugsweise in zwei definierten Oberwagenstellungen, der Gesamtschwerpunkt von Oberwagen und Mittelstück (d.h. insbesondere der Gesamtschwerpunkt des Zweiwegefahrzeugs ohne Berücksichtigung des Schienenfahrwerks bzw. der Endstücke) innerhalb der Mittelebene des Unterwagens und somit in einer Ebene mit den Pendelachsen der Schienenachsen liegt. Hierdurch liegt kein Drehmoment um die Pendelachsen vor, was zu einer Verringerung der Drehmomentbelastung auf die Verbindungselemente und Lagerstellen führt.

Die Aktuatoren zum Bewegen der Schienenachsen in die jeweiligen Fahrstellungen sind vorzugsweise als hydraulische Schwenkzylinder ausgebildet, wobei das Zweiwegefahrzeug einen Hydraulikkreis zum Betätigen der Schwenkzylinder umfasst. Das Zweiwegefahrzeug umfasst vorzugsweise eine Steuerung, um die Schwenkzylinder zu steuern und die Schienenachsen automatisch in die gewünschte Fahrstellung zu bewegen. Die Steuerung kann bevorzugt eine Hydraulikpumpe und/oder ein Steuerventil des Hydraulikkreises ansteuern, um die Schwenkzylinder zu betätigen.

Die vorliegende Erfindung betrifft ferner ein Schienenfahrwerk für ein erfindungsgemäßes Zweiwegefahrzeug. Hierbei ist das mindestens eine Endstück als Anbaukonsole ausgestaltet und besitzt entsprechende Verbindungselemente, um es mit dem bestehenden Unterwagen eines erfindungsgemäßen Zweiwegefahrzeugs verbinden zu können.

Weitere Merkmale, Einzelheiten und Vorteile der Erfindung ergeben sich aus den nachfolgend anhand der Figuren erläuterten Ausführungsbeispielen. Es zeigen:
- Figur 1:: eine schematische perspektivische Darstellung des Unterwagens eines Ausführungsbeispiels des erfindungsgemäßen Zweiwegefahrzeugs;
- Figuren 2a-b:: schematische Seitenansichten des Unterwagens des erfindungsgemäßen Zweiwegefahrzeugs in den zweiten und dritten Fahrstellungen gemäß einem Ausführungsbeispiel;
- Figuren 3-4:: Längsschnitte durch Mittelstück und Endstück entlang der Pendelachse gemäß zweier Ausführungsbeispiele;
- Figur 5:: eine perspektivische Ansicht eines Längsschnitts durch Mittelstück und Endstück gemäß dem Ausführungsbeispiel der Figur 3;
- Figur 6:: eine seitliche Ansicht des Mittelstücks und des zweiten Rahmenteils beim Zusammenfügen;
- Figur 7:: eine seitliche Schnittansicht durch das erste Drehlager gemäß einem Ausführungsbeispiel; und
- Figur 8:: das Endstück des erfindungsgemäßen Zweiwegefahrzeugs gemäß einem Ausführungsbeispiel in einer perspektivischen Ansicht.

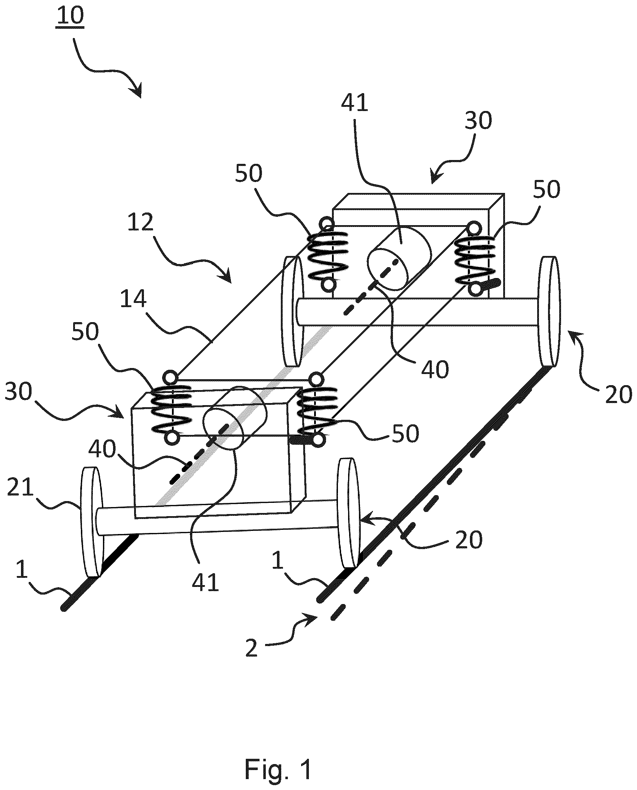

Die Figur 1 zeigt den Unterwagen 12 eines Ausführungsbeispiels des erfindungsgemäßen Zweiwegefahrzeugs 10, wobei der Aufbau des Unterwagens 12 nur grob schematisch dargestellt ist. Dabei kann es sich um den Unterwagen 12 eines Zweiwegebaggers handeln. Der Unterwagen 12 umfasst ein Mittelstück 14, welches ein hier nicht dargestelltes Radfahrwerk mit mindestens zwei Radachsen 15 trägt. An den in Fahrtrichtung gesehen vorderen und hinteren Stirnseiten des Mittelstücks 14 befinden sich zwei Endstücke 30, welche jeweils eine Schienenachse 20 tragen. Die beiden Endstücke 30 mit den Schienenachsen 20 bilden ein Schienenfahrwerk des Zweiwegefahrzeugs 10.

In der gezeigten Ansicht der Figur 1 befindet sich das Zweiwegefahrzeug 10 auf Schienen 1, die als zwei durchgezogene Linien dargestellt sind. Dabei ist eine der Schienen 1 im Vergleich zu deren nominaler Lage (gezeigt als gestrichelte Linie) und somit im Vergleich zur anderen Schiene 1 erhöht. Aus dieser Verwindung 2 ergibt sich ein Höhenunterschied zwischen den beiden Schienen 1, der bei einer rotationsstarren Anbindung der Schienenachsen 20 bzw. Endstücke 30 an das Mittelstück 14 dazu führen würde, dass eines der Schienenräder von der Schiene 1 abhebt.

Um derartige Schienenverwindungen und -unebenheiten ausgleichen zu können, sind die Endstücke 30 über eine Drehlagerung drehbar mit dem Mittelstück 14 verbunden. Da die Figur 1 nur das zugrundeliegende Prinzip verdeutlichen soll, ist jeweils ein Drehlager 41 zwischen Endstück 30 und Mittelstück 14 gezeigt. Allerdings sind die Endstücke 30 jeweils über zwei Drehlager 41, 42 drehbar mit dem Mittelstück 14 verbunden, wie im Folgenden noch eingehender erläutert wird. Die beiden Drehlager 41, 42 sind dabei entlang der Längsachse des Unterwagens 12 zueinander versetzt angeordnet, sodass deren Drehachsen koaxial zueinander verlaufen und für jedes Endstück 30 eine definierte Pendelachse 40 bilden, um die die jeweilige Schienenachse 20 zum Ausgleich von Schienenunebenheiten pendeln kann.

Die Endstücke 30 können unabhängig voneinander um die jeweilige Pendelachse 40 drehen, um Schienenunebenheiten effektiv und sicher auszugleichen und zu jeder Zeit einen Schienenkontakt durch alle Schienenräder 21 sicherzustellen.

Das Zweiwegefahrzeug 10 kann mehrere Lageranordnungen 50 umfassen, welche jeweils paarweise zwischen den Endstücken 30 und dem Mittelstück 14 angeordnet sind. Im einfachsten Fall können diese, wie in der Figur 1 dargestellt, als Federelemente ausgebildet sein, um die Pendelbewegungen der Schienenachsen 20 gegenüber dem Mittelstück 14 zu hemmen.

Gemäß einer bevorzugten Ausführungsform können die Lageranordnungen 50 zwei Betriebsmodi aufweisen, zwischen denen sie aktiv umschaltbar sind. In einem Dämpfungsmodus, welcher insbesondere für die Schienenfahrt eingesetzt wird, kann jede der Lageranordnungen 50 eine niedrigere Steifigkeit bereitstellen als in einem Sperrmodus, welcher insbesondere in einem schienengebundenen Arbeitsbetrieb des Zweiwegefahrzeugs 10 zum Einsatz kommt. Im Sperrmodus ergibt sich durch die in der Figur 1 gezeigte Anordnung der Lageranordnungen 50 eine viereckige Stützbasis mit im Wesentlichen ein Rechteck bildenden Kippkanten (wobei auch andere Anordnungen denkbar sind). Die Lageranordnungen 50 können jeweils ein Elastomerelement zum Bereitstellen der höheren Steifigkeit und einen dazu in Reihe geschalteten Hydraulikzylinder umfassen, wobei letzterer durch eine Verschiebung eines als verstellbarer Anschlag fungierenden Kolbens die niedrigere Steifigkeit bereitstellt und vorzugsweise durch ein Sperrventil für den Sperrbetrieb "deaktivierbar" ist.

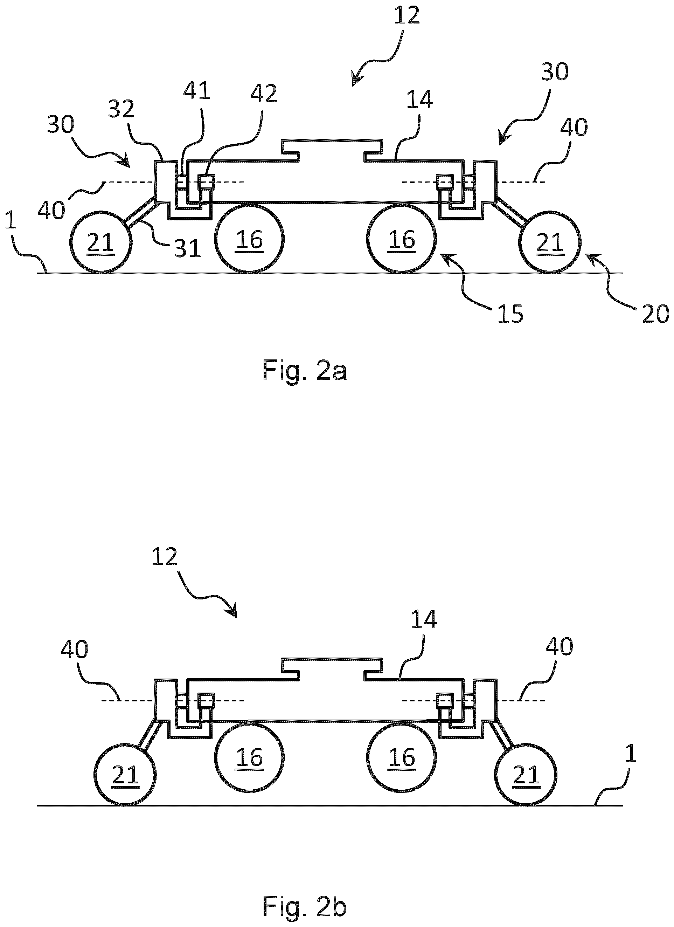

Die Figuren 2a-b zeigen den Unterwagen 12 eines Ausführungsbeispiels des erfindungsgemäßen Zweiwegefahrzeugs 10 in einer schematischen Seitenansicht. Hierbei sind nun die Räder 16 der Radachsen 15 eingezeichnet, von denen mindestens eine Radachse 15 über einen nicht dargestellten Antriebsstrang des Mittelstücks 14 antreibbar ist. Hierbei der prinzipielle Aufbau der Endstücke 30 dieses Ausführungsbeispiels zu erkennen. Jedes der Endstücke 30 umfasst ein erstes Rahmenteil 31, an welchem die jeweilige Schienenachse 20 gelagert bzw. an welches die jeweilige Schienenachse 20 angebunden ist, sowie ein um die Pendelachse 40 drehbar mit dem Mittelstück 14 gekoppeltes zweites Rahmenteil 32. In den Figuren 2a-b sind die Schienenräder 21 der Schienenachsen 20 zu erkennen. In den Figuren 2a-b ist bereits schematisch angedeutet, dass das Mittelstück 14 einen Drehkranz zur drehbaren Lagerung eines Oberwagens besitzen kann.

Die ersten und zweiten Rahmenteile 31, 32 sind in Bezug auf die jeweilige Pendelachse 40 rotationsstarr miteinander verbunden, sodass eine Drehung eines zweiten Rahmenteils 32 um die Pendelachse 40 zu einer entsprechenden Pendelbewegung der zugeordneten Schienenachse 20 führt. Die ersten und zweiten Rahmenteile 31, 32 sind aber nicht starr, sondern über einen Betätigungsmechanismus beweglich miteinander verbunden. Durch Bewegung der ersten Rahmenteile 31 relativ zu den zweiten Rahmenteilen 32 werden die Schienenachsen 20 in die unterschiedlichen Fahrstellungen bewegt.

Das Zweiwegefahrzeug 10 kann drei unterschiedliche Fahrstellungen besitzen. In einer erste Fahrstellung für die Straßenfahrt sind die Schienenachsen 20 angehoben und der Unterwagen 12 sitzt nur über die Räder 16 der Radachsen 15 auf dem Boden auf und kann über diese verfahren werden (z.B. auf einer öffentlichen Straße oder auf unebenem Gelände). In einer zweiten Fahrstellung für die Schienenfahrt sind die Schienenachsen 20 über den Betätigungsmechanismus so weit abgesenkt, dass die Räder 16 auf den Schienen 1 aufsitzen und gleichzeitig die Schienenräder 21 der Schienenachsen 20 auf den Schienen 1 aufsitzen, sodass das Zweiwegefahrzeug 10 über die Radachsen 15 angetrieben und über die Schienenachsen 20 auf den Schienen 1 geführt wird. In einer dritten Fahrstellung für die Schienenfahrt sind die Schienenachsen 20 über den Betätigungsmechanismus weiter abgesenkt, sodass das Zweiwegefahrzeug 10 nur noch über die Schienenräder 21 auf den Schienen 1 aufsitzt und die Räder 16 der Radachsen 15 in der Luft hängen. Der Antrieb erfolgt dann über die Schienenachsen 20.

Bei dem in den Figuren 2a-b gezeigten Ausführungsbeispiel sind die ersten Rahmenteile 31 um horizontale und parallel zu den Schienenachsen 20 verlaufende Schwenkachsen schwenkbar mit den zweiten Rahmenteilen 32 gekoppelt, wobei der Betätigungsmechanismus nicht dargestellte Schwenkzylinder umfassen kann, die zwischen den ersten und zweiten Rahmenteilen 31, 32 verbaut und mit diesen gelenkig gekoppelt sind. Die Schienenachsen 20 werden dann durch Ein- und Ausfahren der Schwenkzylinder um die horizontalen Schwenkachsen geschwenkt, um die unterschiedlichen Fahrstellungen einzunehmen. Die ersten Rahmenteile 31 stellen somit radial gelagerte Schwenkrahmen dar.

Die Figur 2a zeigt die zweite Fahrstellung, bei der sowohl die Räder 16 als auch die Schienenräder 21 auf den Schienen 1 aufliegen. Die ersten Rahmenteile 31 sind hierfür in eine entsprechende Position nach unten geschwenkt. Die Figur 2b zeigt die dritte Fahrstellung, bei der die ersten Rahmenteile 31 weiter abgesenkt worden sind, sodass die Räder 16 keinen Kontakt zu den Schienen 1 besitzen und der Unterwagen 12 nur über die Schienenräder 21 aufsitzt. Durch die Anordnung der Drehlagerungen zwischen den zweiten Rahmenteilen 32 und dem Mittelstück 14 verlaufen die Pendelachsen 40 in beiden Fahrstellungen parallel zueinander. Dadurch kommt es in keiner der Fahrstellungen bei ausgleichenden Pendelbewegungen zu nennenswerten ungewollten Lenkbewegungen der Schienenachsen 20 um vertikale Hochachsen. Alternativ könnte das Zweiwegefahrzeug 10 so ausgebildet sein, dass es nur eine der beiden in den Figuren 2a-b gezeigten Fahrstellungen für die Schienenfahrt aufweist, beispielsweise nur die zweite Fahrstellung der Figur 2a.

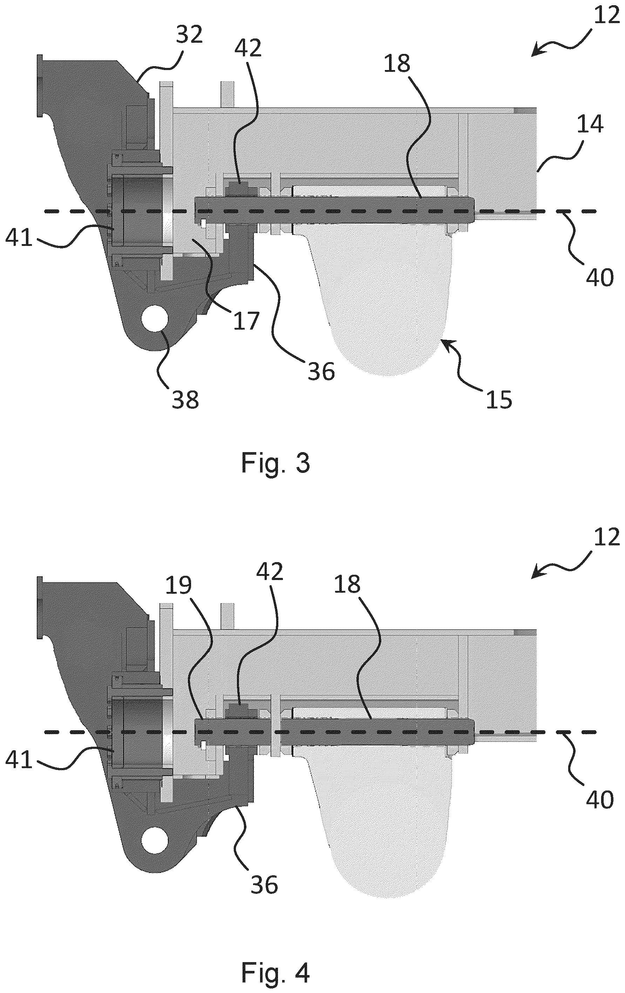

In den Figuren 2a-b ist das Grundprinzip der Drehlagerung der Endstücke 30 am Mittelstück 14 schematisch dargestellt. Dieses kann unabhängig von dem in den Figuren 2a-b gezeigten und zuvor diskutierten Aufbau der Endstücke 30 verwirklicht sein und kann daher auch bei anderen Ausgestaltungen der Endstücke 30 zum Einsatz kommen. Das im Folgenden beschriebene Konzept der axial voneinander beabstandeten Drehlager 41, 42 und die nachfolgend anhand der Figuren 4-9 diskutierten Ausführungsbeispiele sind also nicht auf die Ausführungsform der Figuren 2a-2b beschränkt. Die folgende Erklärung erfolgt anhand eines der Endstücke 30. Das andere Endstück 30 besitzt aber denselben Aufbau bzw. dieselbe Drehlagerung.

Die Drehlagerung des Endstücks 30 umfasst zwei axial, d.h. entlang der Pendelachse 40 voneinander beabstandete Drehlager 41, 42. Ein erstes Drehlager 41 ist zwischen dem zweiten Rahmenteil 32 und einer Stirnseite des Mittelstücks 14 angeordnet, während ein zweites Drehlager 42 in Richtung der gegenüberliegenden Stirnseite des Mittelstücks 14 vom ersten Drehlager 41 beabstandet ist. Das zweite Drehlager 42 befindet sich an einem Stützarm 36 des zweiten Rahmenteils 32, welcher die beiden Drehlager 41, 42 (bzw. die jeweiligen endstückseitigen Lagerteile der Drehlager 41, 42) starr miteinander verbindet. Dass das erste Drehlager 41 zwischen dem zweiten Rahmenteil 32 und dem Mittelstück 14 angeordnet ist, ist insbesondere eine funktionale Definition. Das erste Drehlager 41 kann tatsächlich zwischen dem zweiten Rahmenteil 32 und dem Mittelstück 14 angeordnet sein, kann aber auch beispielsweise im zweiten Rahmenteil 32 verbaut sein (siehe Fig. 3-5). Umgekehrt wäre eine Anordnung im Mittelstück 14 denkbar.

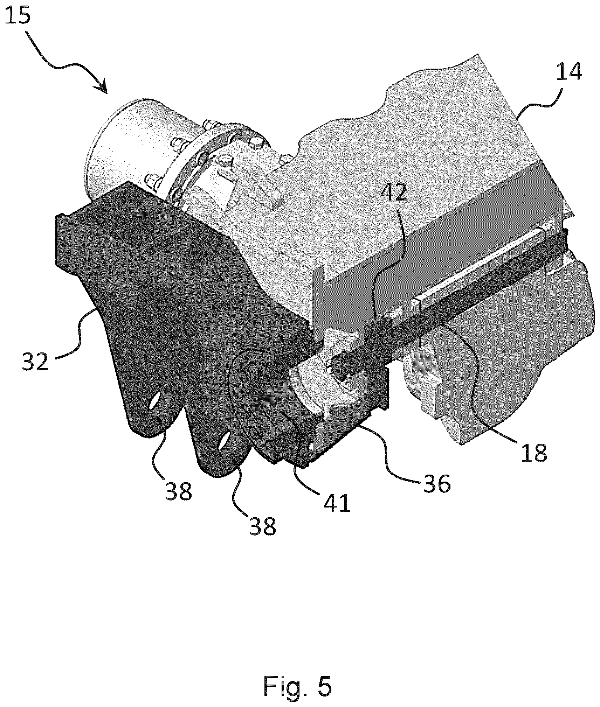

In den Figuren 3 und 5 ist ein Ausführungsbeispiel des Zweiwegefahrzeugs 10 mit einer konkreten Ausgestaltung der Drehlagerung dargestellt, wobei das zweite Rahmenteil 32 eines der Endstücke 30 sowie der Lagerbereich am Mittelstück 14 in einer seitlichen (Fig. 3) und einer perspektivischen (Fig. 5) Schnittansicht gezeigt sind.

Das zweite Drehlager 42 ist mit einem Pendelbolzen 18 des Mittelstücks 14 verbunden, an welchem die Radachsen 15 drehbar gelagert sind und welcher eine Radachsenpendelachse des Zweiwegefahrzeugs definiert. Die Radachsenpendelachse fällt hierbei mit der durch die beiden Drehlager 41, 42 definierten Pendelachse 40, um die die Schienenachse 20 pendeln kann, zusammen.

Das erste Drehlager 41 kann, wie bei dem gezeigten Ausführungsbeispiel, größer als das zweite Drehlager 42 ausgebildet und dazu ausgelegt sein, primär horizontale und vertikale Kräfte aufzunehmen und zwischen Endstück 30 bzw. zweitem Rahmenteil 32 und Mittelstück 14 zu übertragen. Über den Stützarm 36 und das zweite Drehlager 42 werden dagegen primär Momente übertragen.

Die Drehlagerung kann als fliegende Lagerung ausgestaltet sein, wobei das zweite Drehlager 42 als Loslager ausgebildet ist. Dadurch werden Axialkräfte zwischen Endstück 30 und Mittelstück 14 nur durch das erste Drehlager 41 übertragen, sodass eine definierte Einleitung vom Brems- und Beschleunigungskräften erfolgt.

Wie in den Figuren 3 und 5 zu erkennen ist, kann das Mittelstück 14 stirnseitige Endabschnitte 17 umfassen, in denen die ersten Drehlager 41 aufgenommen sind. Der Stützarm 36 umgreift hierbei den stirnseitigen Endabschnitt 17 an der Unterseite des Mittelstücks 14 und verläuft von unten bis zum Pendelbolzen 18, wo sich das zweite Drehlager 42 befindet. Dadurch ergibt sich ein robuster und kompakter Aufbau.

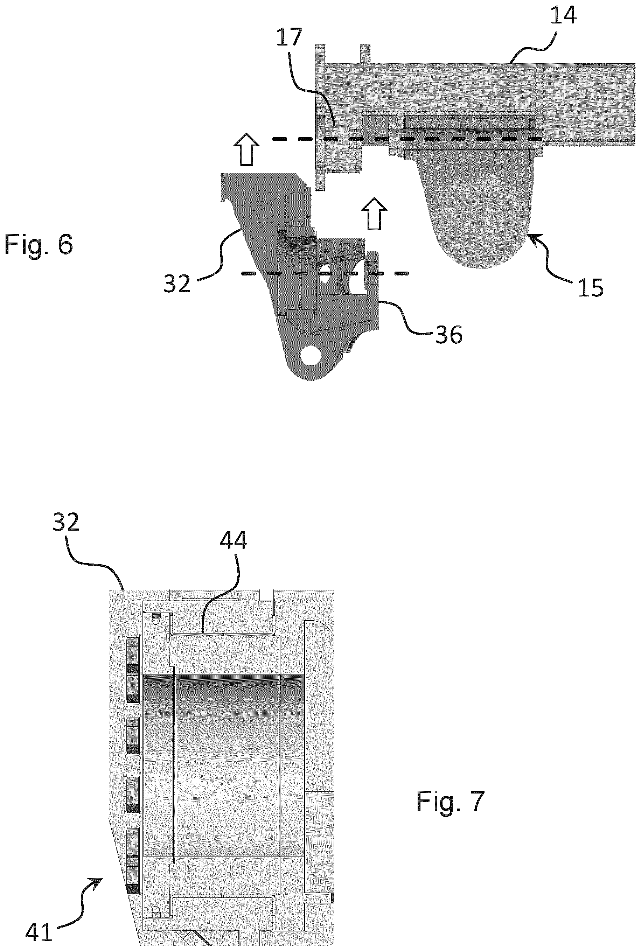

Die Figur 6 zeigt das zweite Rahmenteil 32 und den stirnseitigen Endabschnitt 17 des Mittelstücks 14 vor dem Zusammensetzen. Das zweite Rahmenteil 32 kann an einem unteren Abschnitt Bolzenaufnahmen 38 aufweisen (vgl. Fig. 3 und 5), an denen das erste Rahmenteil 31 schwenkbar angelenkt ist (nicht dargestellt). Ferner kann das zweite Rahmenteil 32 an einem oberen Abschnitt weitere Bolzenaufnahmen (nicht dargestellt) aufweisen, um die Schwenkzylinder 22 gelenkig daran zu befestigen. Diese sind ebenfalls gelenkig mit dem ersten Rahmenteil 31 verbunden und verschwenken dieses durch Ein- oder Ausfahren auf eine geeignete Länge in die gewünschte Fahrstellung (vgl. Fig. 2a-b).

In der Figur 4 ist ein alternatives Ausführungsbeispiel gezeigt, bei dem das zweite Drehlager 42 nicht auf einem gemeinsamen Pendelbolzen, sondern an einem koaxial zum Pendelbolzen verlaufenden, separaten Bolzen 19 gelagert ist.

Die Figur 7 zeigt einen Längsschnitt durch das erste Drehlager 41 gemäß einem Ausführungsbeispiel. Das erste Drehlager 41 kann über Bundbuchsen 44 im zweiten Rahmenteil 32 befestigt sein. Das erste Drehlager 41 ermöglicht die Übertragung von axialen Kräften in beide Richtungen, wobei diese durch die jeweiligen Bundbuchsen 44 auf einen Bund des Lagerrings bzw. auf eine Frontplatte des Mittelstücks 14 übertragen werden.

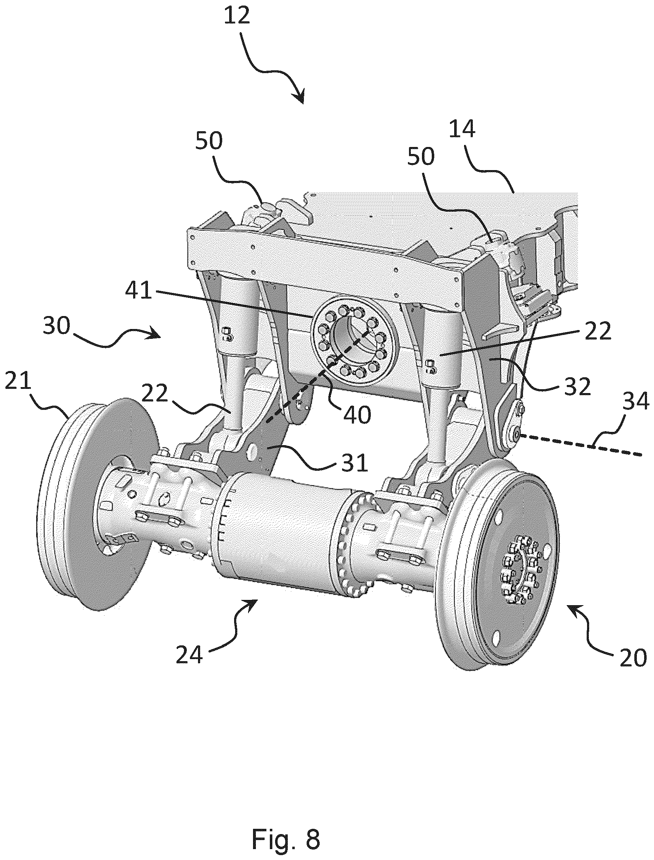

In der Figur 8 ist ein weiteres Ausführungsbeispiel des erfindungsgemäßen Zweiwegefahrzeugs 10 gezeigt, wobei hier eines der Endstücke 30 zusammen mit der Schienenachse 20 näher dargestellt ist. Es sind die beiden Schwenkzylinder 22 des Endstücks 30 zu erkennen, welche gelenkig zwischen erstem Rahmenteil 31 und zweitem Rahmenteil 32 verbaut sind. Es ist die horizontale Schwenkachse 34 eingezeichnet, um die die beiden Rahmenteile 31, 32 schwenkbar miteinander verbunden sind. Ferner ist das erste Drehlager 41 zu erkennen, wohingegen der Stützarm 36 und das zweite Drehlager 42 nicht dargestellt sind. Ferner sind zwei Lageranordnungen 50 zu erkennen, welche im Bereich der oberen Anlenkpunkte der Schwenkzylinder 22 zwischen zweitem Rahmenteil 32 und Mittelstück 14 verbaut sind.

Wie in der Figur 8 dargestellt ist, kann eine der Schienenachsen 20 einen Schienenachsenantriebsmechanismus 24 besitzen, über welchen die Schienenachse 20 für die Fortbewegung des Zweiwegefahrzeugs 10 in der dritten Fahrstellung aktiv antreibbar ist. Der Schienenachsenantriebsmechanismus 24 kann ein mechanisches Getriebe und/oder einen hydraulischen Antrieb umfassen.

### Bezugszeichenliste:

- 1: Schiene
- 2: Verwindung
- 10: Zweiwegefahrzeug
- 12: Unterwagen
- 14: Mittelstück
- 15: Radachse
- 16: Rad
- 17: Stirnseitiger Endabschnitt
- 18: Pendelbolzen
- 19: Bolzen
- 20: Schienenachse
- 21: Schienenrad
- 22: Aktuator
- 24: Schienenachsenantriebsmechanismus
- 30: Endstück
- 31: Erstes Rahmenteil
- 32: Zweites Rahmenteil
- 34: Schwenkachse
- 36: Stützarm
- 38: Bolzenaufnahme
- 40: Pendelachse
- 41: Erstes Drehlager
- 42: Zweites Drehlager
- 44: Bundbuchse
- 50: Lageranordnung

## Patentansprüche

1. Zweiwegefahrzeug (10), insbesondere Zweiwegebagger, mit einem Unterwagen (12), welcher ein Radfahrwerk mit mindestens zwei Radachsen (15) für die Straßenfahrt und ein Schienenfahrwerk mit einer vorderen und einer hinteren Schienenachse (20) für die Schienenfahrt umfasst, wobei der Unterwagen (12) ein Mittelstück (14) umfasst, an welchem die Radachsen (15) angeordnet sind, wobei das Schienenfahrwerk Aktuatoren (22) umfasst, mittels welchen die Schienenachsen (20) relativ zum Mittelstück (14) zwischen einer ersten Fahrstellung für die Straßenfahrt und wenigstens einer zweiten Fahrstellung für die Schienenfahrt bewegbar sind,
**dadurch gekennzeichnet,**
**dass** das Schienenfahrwerk wenigstens ein Endstück (30) umfasst, welches eine der Schienenachsen (20) trägt und um eine parallel zu einer Längsachse des Unterwagens (12) verlaufende Pendelachse (40) drehbar am Mittelstück (14) gelagert ist, um Unebenheiten bei der Schienenfahrt durch eine Pendelbewegung der Schienenachse (20) auszugleichen, wobei das Endstück (30) über ein erstes Drehlager (41) und ein entlang der Pendelachse (40) vom ersten Drehlager (41) beabstandetes zweites Drehlager (42) am Mittelstück (14) gelagert ist.

2. Zweiwegefahrzeug (10) nach Anspruch 1, wobei das erste Drehlager (41) an einer in Fahrtrichtung gesehen vorderen oder hinteren Stirnseite des Mittelstücks (14) und das zweite Drehlager (42) in Richtung der gegenüberliegenden Stirnseite des Mittelstücks (14) versetzt zum ersten Drehlager (41) angeordnet ist.

3. Zweiwegefahrzeug (10) nach einem der vorhergehenden Ansprüche, wobei das erste Drehlager (41) dazu ausgebildet ist, Kräfte parallel zur Pendelachse (40) zu übertragen, wobei das zweite Drehlager (42) vorzugsweise als Loslager ausgebildet ist.

4. Zweiwegefahrzeug (10) nach einem der vorhergehenden Ansprüche, wobei das zweite Drehlager (42) an einem Stützarm (36) des Endstücks (30) angeordnet ist, welcher einen das erste Drehlager (41) umfassenden stirnseitigen Endabschnitt (17) des Mittelstücks (14) umgreift und/oder zu einer Unterseite des Mittelstücks (14) verläuft.

5. Zweiwegefahrzeug (10) nach einem der vorhergehenden Ansprüche, wobei wenigstens eine Radachse (15) um eine koaxial zur Drehachse (40) verlaufende Radfahrwerkpendelachse schwenkbar gelagert ist, wobei wenigstens eine Radachse (15) auf einem die Radfahrwerkpendelachse definierenden Pendelbolzen (18) gelagert ist, wobei das zweite Drehlager (42) vorzugsweise auf dem Pendelbolzen (18) oder auf einem separaten, koaxial zum Pendelbolzen (18) gelagerten Bolzen (19) gelagert ist.

6. Zweiwegefahrzeug (10) nach einem der vorhergehenden Ansprüche, wobei das Endstück (30) ein erstes und ein zweites Rahmenteil (31, 32) umfasst, wobei die Schienenachse (20) am ersten Rahmenteil (31) gelagert ist und die ersten und zweiten Drehlager (41, 42) am zweiten Rahmenteil (32) angeordnet sind, wobei die Rahmenteile (31, 32) vorzugsweise beweglich und insbesondere in Bezug auf die Pendelachse (40) rotationsstarr miteinander verbunden sind.

7. Zweiwegefahrzeug (10) nach dem vorhergehenden Anspruch, wobei die ersten und zweiten Rahmenteile (31, 32) schwenkbar, insbesondere um eine horizontale Schwenkachse (34) schwenkbar miteinander verbunden sind, wobei die verschiedenen Fahrstellungen durch Verschwenken des ersten Rahmenteils (31) relativ zum zweiten Rahmenteil (32) erreichbar sind, wobei die Aktuatoren (22) vorzugsweise als Kolben-Zylinder-Einheiten, insbesondere hydraulische Schwenkzylinder, ausgebildet sind, die zwischen den ersten und zweiten Rahmenteilen (31, 32) angeordnet und an diesen jeweils gelenkig gelagert sind.

8. Zweiwegefahrzeug (10) nach einem der vorhergehenden Ansprüche, wobei mindestens ein Endstück (30) über mindestens eine Lageranordnung (50), vorzugsweise über zwei Lageranordnungen (50), mit dem Mittelstück (14) gekoppelt ist, wobei die Lageranordnung (50) zwischen einem Dämpfungsmodus mit vergleichsweise niedriger Steifigkeit und einem Sperrmodus mit vergleichsweise höherer Steifigkeit umschaltbar ist.

9. Zweiwegefahrzeug (10) nach dem vorhergehenden Anspruch, wobei die Lageranordnung (50) zwei getrennte Baugruppen umfasst, wobei eine erste Baugruppe die höhere Steifigkeit bereitstellt und vorzugsweise ein Elastomerelement umfasst und wobei eine zweite Baugruppe die niedrigere Steifigkeit bereitstellt und zum Umschalten in den Sperrmodus deaktivierbar ist.

10. Zweiwegefahrzeug (10) nach dem vorhergehenden Anspruch, wobei die zweite Baugruppe ein durch die erste Baugruppe kontaktierbares, verschiebbar gelagertes Kontaktelement umfasst, das zum Umschalten in den Sperrmodus verriegelbar und zum Umschalten in den Dämpfungsmodus entriegelbar ist, wobei eine Verschiebung des Kontaktelements im Dämpfungsmodus mit der niedrigeren Steifigkeit erfolgt, wobei vorzugsweise die zweite Baugruppe einen Hydraulikzylinder mit einem in einem Zylindergehäuse verschiebbar gelagerten Kolben umfasst, der das Kontaktelement darstellt oder mit diesem verbunden ist,

11. Zweiwegefahrzeug (10) nach einem der vorhergehenden Ansprüche, wobei das Schienenfahrwerk ein vorderes und ein hinteres Endstück (30) umfasst, welche jeweils an einer in Fahrtrichtung gesehen vorderen und hinteren Stirnseite des Mittelstücks (14) angeordnet und jeweils über ein erstes und ein zweites Drehlager (41, 42) drehbar mit dem Mittelstück (14) verbunden sind, wobei die Pendelachsen (40) vorzugsweise unabhängig von der Fahrstellung koaxial zueinander verlaufen.

12. Zweiwegefahrzeug (10) nach einem der vorhergehenden Ansprüche, wobei die Schienenachsen (20) relativ zum Mittelstück (14) zwischen einer ersten Fahrstellung für die Straßenfahrt, einer zweiten Fahrstellung, in der das Zweiwegefahrzeug (10) über die Schienenachsen (20) auf Schienen (1) geführt und über die Radachsen (15) antreibbar ist, und einer dritten Fahrstellung, in der das Zweiwegefahrzeug (10) nur über die Schienenachsen (20) auf Schienen (1) aufsitzt und antreibbar ist, bewegbar sind.

13. Zweiwegefahrzeug (10) nach einem der vorhergehenden Ansprüche, wobei zumindest eine der Schienenachsen (20) einen Schienenachsenantriebsmechanismus (24) umfasst und über diesen in einer Fahrstellung für die Schienenfahrt antreibbar ist, wobei der Schienenachsenantriebsmechanismus (24) insbesondere zusammen mit der Schienenachse (20) um die Drehachse (40) relativ zum Mittelstück (14) drehbar und über die Aktuatoren (22) relativ zum Mittelstück (14) in die verschiedenen Fahrstellungen bewegbar ist.

14. Zweiwegefahrzeug (10) nach einem der vorhergehenden Ansprüche, ferner umfassend einen drehbar auf dem Unterwagen (12) gelagerten Oberwagen, wobei Unterwagen (12) und Oberwagen vorzugsweise so ausgebildet sind, dass in wenigstes einer, insbesondere in zwei definierten Oberwagenstellungen der Gesamtschwerpunkt von Oberwagen und Mittelstück (14) innerhalb einer horizontalen, die Drehachse (40) umfassenden Mittelebene des Unterwagens (12) liegt.

15. Schienenfahrwerk für ein Zweiwegefahrzeug (10) nach einem der vorhergehenden Ansprüche, wobei das mindestens eine Endstück (30) als Anbaukonsole mit Verbindungselementen ausgestaltet ist, über die es am Unterwagen (12) des Zweiwegefahrzeugs (10) montierbar ist.
